# EUROPÄISCHE PATENTSCHRIFT

(11) **EP 2 334 956 B1**
(45) Veröffentlichungstag und Bekanntmachung des Hinweises auf die Patenterteilung: **15.08.2012**
(21) Anmeldenummer: 09771265.7
(22) Anmeldetag: 21.09.2009
(51) Int. Cl.: F16H 61/00, F16H 61/662

(54) **HYDRAULIKANORDNUNG ZUR STEUERUNG EINES GETRIEBES**
HYDRAULIC ARRANGEMENT FOR CONTROLLING A TRANSMISSION
SYSTEME HYDRAULIQUE DE COMMANDE DE TRANSMISSION

(30) Priorität: 16.10.2008 DE 102008051967
(43) Veröffentlichungstag der Anmeldung: 22.06.2011
(73) Patentinhaber: Schaeffler Technologies AG & Co. KG, 91074 Herzogenaurach (DE)
(72) Erfinder: GRETHEL, Marco, 77830 Bühlertal (DE); MÜLLER, Eric, 67657 Kaiserslautern (DE)
(86) Internationale Anmeldenummer: PCT/DE2009/001327
(87) Internationale Veröffentlichungsnummer: WO 2010/043192

(56) Entgegenhaltungen:
- EP-A2- 0 931 912
- DE-A1- 4 323 133
- DE-A1-102007 003 924
- JP-A- 2006 037 820
- US-A1- 2007 243 074
- ANONYMOUS: "Remote transmission oil supply" RESEARCH DISCLOSURE, MASON PUBLICATIONS, HAMPSHIRE, GB, Bd. 339, Nr. 69, 1. Juli 1992 (1992-07-01) , XP007117930 ISSN: 0374-4353

## Beschreibung

Die Erfindung betrifft eine Hydraulikanordnung zur Steuerung eines einem Verbrennungsmotor mit einer Start-Stopp-Vorrichtung nachgeschalteten Getriebes, mit einer hydraulischen Energiequelle zum Bereitstellen von hydraulischer Energie, einem der hydraulischen Energiequelle nachgeschalteten Energiespeicher zum zumindest teilweisen Speichern und Abgeben der mittels der hydraulischen Energiequelle bereitstellbaren hydraulischen Energie, einer der hydraulischen Energiequelle und dem Energiespeicher zugeordneten Hydrauliksteuerung zum Steuern des automatisierten Getriebes.

Hydraulikanordnungen der eingangs genannten Art sind bekannt. Mittels der Start-Stopp-Vorrichtung kann der Verbrennungsmotor angelassen und gestoppt werden, beispielsweise abhängig von vordefnierten Betriebszuständen eines mittels des Verbrennungsmotors antreibbaren Kraftfahrzeugs. Mittels des Energiespeichers kann die Hydrauliksteuerung zum Steuern des automatisierten Getriebes zusätzlich mit hydraulischer Energie versorgt werden, insbesondere während einer Stopp-Phase des Verbrennungsmotors. Aus der DE 43 23 133 A1 ist ein Hydrospeicher zum Bereitstellen von Druckfluid bekannt. Die EP 1 898 101 A2 betrifft ein Verfahren zum Betätigen einer Hydraulikspeichereinrichtung einer Getriebeeinrichtung.

Aus den Veröffentlichungen JP 2006-037820 A, DE 10 2007 003 924 A1 und US 2007/243074 A1 sind Hydraulikanordnungen gemäß dem Oberbegriff des Patentanspruchs 1 bekannt. Das Dokument JP 2006-037820 wird als nächster Stand der Technik augesehen.

Aufgabe der Erfindung ist es, eine verbesserte Hydraulikanordnung zur Steuerung eines einem Verbrennungsmotor mit einer Start-Stopp-Vorrichtung nachgeschalteten Getriebes bereitzustellen. Die Hydraulikanordnung soll insbesondere im Hinblick auf den benötigten Bauraum, eine möglichst hohe Temperatur und/oder Alterungsstabilität optimiert werden.

Die Aufgabe ist bei einer Hydraulikanordnung zur Steuerung eines einem Verbrennungsmotor mit einer Start-Stopp-Vorrichtung nachgeschalteten Getriebes, mit einer hydraulischen Energiequelle zum Bereitstellen von hydraulischer Energie, einem der hydraulischen Energiequelle nachgeschalteten Energiespeicher zum zumindest teilweisen Speichern und Abgeben der mittels der hydraulischen Energiequelle bereitstellbaren hydraulischen Energie, einer der hydraulischen Energiequelle und dem Energiespeicher zugeordneten Hydrauliksteuerung zum ern des automatisierten Getriebes, wobei dass der Energiespeicher mittels eines Abzweigs einem Vorsteuerkreis der Hydrauliksteuerung zugeordnet ist, dadurch gelöst, dass der Abzweig einem Oder-Ventil zugeordnet ist, wobei ein erster Oder-Anschluss des Oder-Ventils der hydraulischen Energiequelle nachgeschaltet und ein zweiter Oder-Anschluss des Oder-Ventils dem Vorsteuerkreis zugeordnet ist. Vorteilhaft kann der Energiespeicher mittels des Abzweigs hydraulische Energie des Vorsteuerkreises abzweigen und im Bedarfsfall an derselben Stelle dem Vorsteuerkreis wieder zur Verfügung stellen. Vorteilhaft lässt sich dadurch der Vorsteuerkreis auch während Stopp-Phasen, insbesondere bei einem Übergang von einer Stopp-Phase in eine Lauf-Phase, der Start-Stopp-Vorrichtung, bei denen der Verbrennungsmotor abgeschaltet ist oder gerade angeschaltet wird, gesichert mit hydraulischer Energie versorgen. Vorteilhaft wird der zur Ansteuerung der übrigen Hydrauliksteuerung vorgesehene Vorsteuerkreis bevorzugt mit hydraulischer Energie versorgt. Vorteilhaft kann der Abzweig und damit der Energiespeicher mittels des Oder-Ventils abhängig von einer Druckdifferenz entweder der hydraulischen Energiequelle, zum Beispiel zum Laden des Energiespeichers, oder dem Vorsteuerkreis, beispielsweise zum Entladen des Energiespeichers, zugeordnet werden.

Bei einem Ausführungsbeispiel der Hydraulikanordnung ist vorgesehen, dass der Energiespeicher einen Tellerfederspeicher aufweist. Vorteilhaft weist ein Tellerfederspeicher eine sehr flache Druck-/Volumenabhängigkeit auf. Vorteilhaft ist er dadurch auch kaum von Temperatureinflüssen abhängig. Ferner unterliegt ein Tellerfederspeicher nur einer geringen Alterung.

Bei einem weiteren Ausführungsbeispiel der Hydraulikanordnung ist vorgesehen, dass der Abzweig ein Ladedruckventil aufweist. Das Ladedruckventil kann zwischen den Vorsteuerkreis und den Energiespeicher geschaltet sein, wobei vorteilhaft der Energiespeicher bedarfsabhängig dem Vorsteuerkreis zuordenbar ist. Eine Zuordnung kann beispielsweise lediglich zum Laden und im entgegengesetzten Fall zum Entladen des Energiespeichers erfolgen. In übrigen Betriebszuständen der Hydraulikanordnung beziehungsweise der Hydrauliksteuerung zur Ansteuerung des Getriebes kann der Energiespeicher vollständig abgetrennt werden. Dabei findet vorteilhaft keine unerwünschte Beeinflussung des Vorsteuerkreises durch den Energiespeicher statt.

Bei einem weiteren Ausführungsbeispiel der Hydraulikanordnung ist vorgesehen, dass der Energiespeicher eine mechanische Verriegelung aufweist. Vorteilhaft kann die mechanische Verriegelung bewirken, dass ein Entladen des Energiespeichers nicht stattfindet. Für eine möglicherweise notwendige oder gewünschte Energieentnahme kann die mechanische Verriegelung aufgehoben werden. Es ist denkbar, mittels der mechanischen Verriegelung den Energiespeicher so auszulegen, dass das Ladeventil entfallen kann.

Bei einem weiteren Ausführungsbeispiel der Hydraulikanordnung ist vorgesehen, dass das Getriebe als Kegelscheiben-Umschlingungsgetriebe ausgebildet ist. Bei einem Kegelscheiben-Umschlingungsgetriebe kann ein Übersetzungsverhältnis zwischen dem Verbrennungsmotor und einem nachgeschalteten Triebstrang frei gewählt beziehungsweise eingestellt werden.

Bei einem weiteren Ausführungsbeispiel der Hydraulikanordnung ist vorgesehen, dass der Abzweig einem Vorsteuerdruckventil des Vorsteuerkreises nachgeschaltet ist. Mittels des Vorsteuerdruckventils kann ein Vorsteuerdruck, beispielsweise von 5 Bar, des Vorsteuerkreises eingestellt werden. Es ist möglich, den Energiespeicher mit dem mittels des Vorsteuerdruckventils einstellbaren Druck zu beladen.

Weitere Vorteile, Merkmale und Einzelheiten ergeben sich aus der nachfolgenden Beschreibung, in der unter Bezugnahme auf die Zeichnung ein Ausführungsbeispiel im Einzelnen beschrieben ist. Gleiche, ähnliche und/oder funktionsgleiche Teile sind mit gleichen Bezugszeichen versehen.

Es zeigen:
- Figur 1: eine Hydraulikanordnung mit einer hydraulischen Energiequelle, einem Energiespeicher sowie einer Hydrauliksteuerung zum Steuern eines automatisierten Getriebes und
- Figur 2: eine Hydraulikanordnung, ähnlich der in Figur 1 gezeigten Hydraulikanordnung, wobei jedoch zusätzlich ein Oder-Ventil vorgesehen ist.

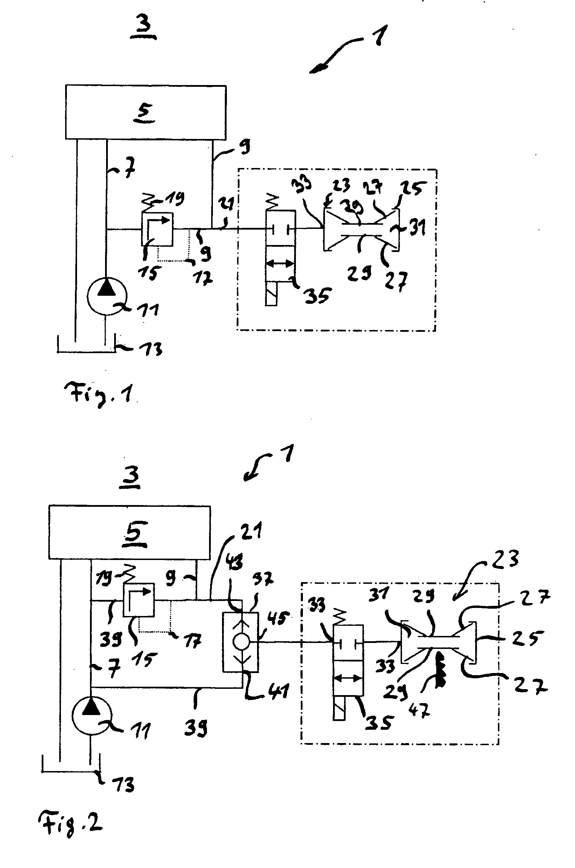

Figur 1 zeigt eine Hydraulikanordnung 1 zur Steuerung eines, einem nicht näher dargestellten Verbrennungsmotors, mit einer Start-Stopp-Vorrichtung nachgeschalteten Getriebes, das in Figur 1 lediglich mittels des Bezugszeichens 3 angedeutet ist. Zur Ansteuerung des Getriebes 5 weist die Hydraulikanordnung 1 eine Hydrauliksteuerung 5 auf. Mittels der Hydrauliksteuerung 5 kann das Getriebe 3 automatisiert werden, wobei beispielsweise Fahrstufen wie Parken, Neutral, Fahren sowie ein Rückwärtsgang hydraulisch angesteuert werden können. Bei dem Getriebe 3 kann es sich um ein beliebiges automatisiertes Getriebe, beispielsweise einen Stufenautomat, ein Kegelscheiben-Umschlingungsgetriebe oder ein Doppelkupplungsgetriebe handeln. Zur Automatisierung beziehungsweise Ansteuerung des Getriebes 3 kann die Hydrauliksteuerung 5 nicht näher dargestellte Steuer- und Stellventile sowie Steuerkolben aufweisen. Die Hydrauliksteuerung 5 weist einen Hauptdruckkreis 7 sowie einen Vorsteuerkreis 9 auf. Mittels des Vorsteuerkreises 9 und des Hauptdruckkreises 7 können die nicht näher dargestellten Hydraulikkomponenten der Hydrauliksteuerung 5 mit hydraulischer Energie versorgt werden. Dabei ist es möglich, den Vorsteuerkreis 9 mit einem Vorsteuerdruck, beispielsweise von 5 Bar, und den Hauptdruckkreis 7 mit einem Systemdruck, der üblicherweise über dem Vorsteuerdruck liegt, zu beaufschlagen. Zum Erzeugen des Systemdrucks und/oder des Vorsteuerdrucks ist die Hydrauliksteuerung 5 einer hydraulischen Energiequelle 11 zugeordnet beziehungsweise nachgeschaltet. Die hydraulische Energiequelle 11 kann ein Hydraulikmedium, beispielsweise Hydrauliköl, aus einem Tank 13 fördern und das Druckniveau auf den Systemdruck anheben. Der Hauptdruckkreis 7 ist der hydraulischen Energiequelle 11 direkt nachgeschaltet. Der Vorsteuerkreis 9 ist der hydraulischen Energiequelle ebenfalls nachgeschaltet, jedoch über ein Vorsteuerdruckventil 15. Bei dem Vorsteuerdruckventil 15 kann es sich um ein üblicherweise zu diesem Zweck verwendetes Druckregelventil mit einer Druckrückführung 17 und einer Feder 19 handeln. Das Vorsteuerdruckventil 15 regelt den mittels der hydraulischen Energiequelle 11 bereitstellbaren Systemdruck auf den Vorsteuerdruck herunter. Bei der hydraulischen Energiequelle kann es sich beispielsweise um eine mechanisch mittels des nicht näher dargestellten Verbrennungsmotors angetriebene Hydraulikpumpe handeln. Es ist jedoch auch möglich, die Hydraulikpumpe mittels eines ebenfalls nicht näher dargestellten Elektromotors anzutreiben. Schließlich ist es denkbar, dass die hydraulische Energiequelle 11 eine Kombination aus einem mechanischen Antrieb und einem Elektroantrieb aufweist, insbesondere eine mechanisch angetriebene Pumpe und eine elektrisch angetriebene Pumpe.

Dem Vorsteuerkreis 9 ist mittels eines Abzweigs 21 ein Energiespeicher 23 zum Speichern hydraulischer Energie zugeordnet. Der Energiespeicher 23 ist als hydraulischer Druckspeicher ausgebildet und weist ein ringförmiges Gehäuse 25 auf. In dem Gehäuse 25 sind zwei Tellerfedern 27 untergebracht. Die Tellerfedern 27 schlagen jeweils an dem Gehäuse an, das einen U-förmigen Querschnitt aufweist. Die Tellerfedern 27 sind gegenüberliegend angeordnet und stehen sowohl mit dem Gehäuse 27 als auch jeweils mit einem Federdeckel 29 in einem fluiddichten Anlagekontakt. Entsprechende Dichtmittel sind nicht näher dargestellt. Mittels des Gehäuses 25, den Tellerfedern 27 und den Federdeckeln 29 wird ein Druckraum 31 umschlossen. Der Druckraum 31 kann entgegen Federkräften der Tellerfedern 27 zur Speicherung von hydraulischer Energie vergrößert und im umgekehrten Fall zur Abgabe von hydraulischer Energie wieder verkleinert werden. Eine entsprechende Energiespeicherung findet mittels der Tellerfedern 27 statt.

Der Energiespeicher 23 weist einen Anschluss 33 auf, der dem Druckraum 31 zugeordnet ist. Der Anschluss 33 des Energiespeichers 23 ist einem Ladeventil 35 zugeordnet. Das Ladeventil 35 kann beispielsweise als elektrisch betätigbares Schaltventil ausgeführt sein. Mittels des Ladeventils 35 kann der Abzweig 21 entweder auf den Anschluss 33 des Energiespeichers geschaltet werden oder von diesem getrennt werden. Vorteilhaft kann mittels des Ladeventils 35 der Energiespeicher 23 nur zum Laden oder Entladen dem Vorsteuerkreis 9 zugeordnet werden. In Betriebszuständen der Hydrauliksteuerung 5, bei denen keine zusätzliche Energieversorgung mittels des Energiespeichers 23 notwendig ist, kann der Energiespeicher 23 abgetrennt werden. Eine entsprechende Schaltstellung des Ladeventils 35 ist in Figur 1 dargestellt.

Figur 2 zeigt eine weitere Hydraulikanordnung 1, die ähnlich der in Figur 2 dargestellten Hydraulikanordnung 1 aufgebaut ist. Im Folgenden werden lediglich die Unterschiede näher erläutert.

Im Unterschied zur Darstellung gemäß Figur 1 weist die Hydraulikanordnung 1 ein Oder-Ventil 37 auf, das in einen Parallelzweig 39 zum Hauptdruckkreis 7 geschaltet ist, der auch das Vorsteuerdruckventil 15 aufweist.

Das Oder-Ventil 37 weist einen ersten Oder-Anschluss 41 und einen zweiten Oder-Anschluss 43 sowie einen Mittenanschluss 45 auf. Der Mittenanschluss 45 ist dem Anschluss 33 des Ladeventils 35 zugeordnet. Der erste Oder-Anschluss 41 des Oder-Ventils 37 ist der hydraulischen Energiequelle 11 nachgeschaltet. Der zweite Oder-Anschluss 43 des Oder-Ventils 37 ist an den Abzweig 21 angeschlossen und damit dem Vorsteuerkreis 9 und dem Vorsteuerdruckventil 15 zugeordnet.

Vorteilhaft kann auf hohe zusätzliche Ströme bei einem Startvorgang des nicht näher dargestellten Verbrennungsmotors verzichtet werden. Vorteilhaft kann mittels des Energiespeichers 23, insbesondere während des Startvorgangs, hydraulische Energie der Hydrauliksteuerung 5, insbesondere dem Vorsteuerkreis 9, zugeführt werden. Vorteilhaft weist der Energiespeicher 23 die Tellerfedern 27 und den Druckraum 31 auf, bildet einen sogenannten Tellerfederspeicher, der vorteilhaft eine flache Druckvolumenabhängigkeit, kaum Temperatureinflüsse und quasi keine Änderung der Speicherkapazität des Druckraums 31 über seine Lebensdauer aufweist.

Die flache Druckvolumenabhängigkeit des Energiespeichers 23 erlaubt es, an Stellen der Hydrauliksteuerung 5, an denen es bei dem Startvorgang des Verbrennungsmotors zu einer Mangelversorgung kommen kann, in einem Normalbetrieb hydraulische Energie mittels der Tellerfedern 27 des Energiespeichers 23 zu speichern, um diese im Bedarfsfall genau an dieser Stelle wieder einzuspeisen. Vorliegend ist der Energiespeicher 23 vorteilhaft mittels des Abzweigs 21 dem Vorsteuerkreis 9 zugeordnet, nämlich an einer dem Vorsteuerdruckventil 15 nachgeschalteten Position. Diese Position, hinter dem Vorsteuerdruckventil 15, ist besonders geeignet für ein sogenanntes Kegelscheibenumschlingungsgetriebe (CVT). Alternativ sind jedoch auch andere Einmündungsstellen denkbar, insbesondere bei Stufenautomatikgetrieben oder Doppelkupplungsgetrieben. Über das elektrisch ansteuerbare Ladeventil 35 kann der Energiespeicher 23 dicht von der übrigen Hydraulikanordnung 1 abgetrennt werden. Lediglich zum Laden und Entladen kann vorteilhaft das Ladeventil 35 kurz angesteuert werden, sodass dieses öffnet. Bei dem Ladeventil 35 kann es sich vorzugsweise um ein federbelastetes Sitzventil handeln. Alternativ ist jedoch auch eine Ausführung mit einem gedichteten, so genannten Schieberventil vorstellbar. Weiterhin vorstellbar ist, dass der Energiespeicher 23 in einem gespannten, also geladenen, Zustand mechanisch verriegelt wird, um sicherzustellen, dass die im Stahl der Tellerfedern 27 gespeicherte Energie nicht über eine möglicherweise vorhandene Leckage des Ladeventils 35 ungewollt abgebaut werden kann. In Figur 2 ist schematisch eine Verriegelung 47 des Energiespeichers 23 angedeutet. Mittels der Verriegelung 47 kann eine sonst stattfindende Verkleinerung des Druckraums 31 mittels Federkräften der Tellerfedern 27 blockiert werden, sodass ein ungewolltes Entweichen von Energie aus dem Energiespeicher 23 sicher verhinderbar ist. Im Falle einer gewünschten Energieentnahme kann die Verriegelung 47 entriegelt werden, sodass der Energiespeicher 23 hydraulische Energie in den Vorsteuerkreis 9 geben kann. Für diesen Fall ist es denkbar, auf das Ladeventil 35 zu verzichten, also dieses komplett entfallen zu lassen, insbesondere wenn sichergestellt wird, dass ein Leerlaufen des Energiespeichers 23 über eine entsprechende Leitungsführung gegeben ist. Derartige mechanische Haltesysteme sind in der DE 43 23 133 A1 derselben Anmelderin offen gelegt und können in Analogie auch für den in den Figuren 1 und 2 gezeigten Energiespeicher zum Einsatz kommen. Die DE 43 23 33 A1, insbesondere die Figuren 1 und 2 sowie die dazugehörige Beschreibung, wird durch Bezugnahme zum Inhalt dieser Anmeldung gemacht.

Sollte es notwendig werden, den Energiespeicher, 23 mit einem höheren Druckniveau zu laden, als das Druckniveau des angeschlossenen Verbrauchers bei dem Startvorgang des Verbrennungsmotors erfordert, ist dies gemäß der Darstellung in Figur 2 auch möglich. Vorteilhaft kann dies mittels des Oder-Ventils 37 erfolgen, das dem Hauptdruckkreis parallel geschaltet und der hydraulischen Energiequelle nachgeschaltet ist. Das Oder-Ventil 37 ist zwischen den Anschluss 33 des Ladeventils 35 und den Abzweig 21 geschaltet, also in eine dem Energiespeicher 23 zugeordnete Entladeleitung. Das Laden des Energiespeichers 23 kann bei geöffnetem Ladeventil 35 über den ersten Oder-Anschluss 41 oder den zweiten Oder-Anschluss 43 erfolgen, und zwar je nachdem an welchem der Anschlüsse 41, 43 der höhere Druck anliegt. Im Falle des ersten Oder-Anschlusses 41 kann es sich dabei um den höheren Systemdruck handeln. Ein Volumenstrom zum Entladen des Energiespeichers 23 kann über das Oder-Ventil 37 dem Vorsteuerkreis 9 zugeführt werden.

### Bezugszeichenliste

- 1: Hydraulikanordnung
- 3: Getriebe
- 5: Hydrauliksteuerung
- 7: Hauptdruckkreis
- 9: Vorsteuerkreises
- 11: Energiequelle
- 13: Tank
- 15: Vorsteuerdruckventil
- 17: Druckrückführung
- 19: Feder
- 21: Abzweig
- 23: Energiespeicher
- 25: Gehäuse
- 27: Tellerfeder
- 29: Federdeckel
- 31: Druckraum
- 33: Anschluss
- 35: Ladeventil
- 37: Oder-Ventil
- 39: Parallelzweig
- 41: erster Oder-Anschluss
- 43: zweiter Oder-Anschluss
- 45: Mittenanschluss
- 47: Verriegelung

## Patentansprüche

1. Hydraulikanordnung (1) zur Steuerung eines einem Verbrennungsmotor mit einer Start-Stopp-Vorrichtung nachgeschalteten automatisierten Getriebes (3), mit:
- einer hydraulischen Energiequelle (11) zum Bereitstellen von hydraulischer Energie,
- einem der hydraulischen Energiequelle (11) nachgeschalteten Energiespeicher (23) zum zumindest teilweisen Speichern und Abgeben der mittels der hydraulischen Energiequelle (11) bereitstellbaren hydraulischen Energie,
- einer der hydraulischen Energiequelle (11) und dem Energiespeicher (23) zugeordneten Hydrauliksteuerung (5) zum Steuern des automatisierten Getriebes (3),
wobei der Energiespeicher (23) mittels eines Abzweigs (21) einem Vorsteuerkreis (9) der Hydrauliksteuerung (5) zugeordnet ist, **dadurch gekennzeichnet, dass** der Abzweig (21) einem Oder-Ventil (37) zugeordnet ist, wobei ein erster Oder-Anschluss (41) des Oder-Ventils (37) der hydraulischen Energiequelle (11) nachgeschaltet und ein zweiter Oder-Anschluss (43) des Oder-Ventils (37) dem Vorsteuerkreis (9) zugeordnet ist.

2. Hydraulikanordnung nach dem vorhergehenden Anspruch, **dadurch gekennzeichnet, dass** der Energiespeicher (23) einen Tellerfederspeicher aufweist.

3. Hydraulikanordnung nach einem der vorhergehenden Ansprüche, **dadurch gekennzeichnet, dass** der Abzweig (21) ein Ladeventil (35) aufweist.

4. Hydraulikanordnung nach einem der vorhergehenden Ansprüche, **dadurch gekennzeichnet, dass** der Energiespeicher (23) eine mechanische Verriegelung (47) aufweist.

5. Hydraulikanordnung nach einem der vorhergehenden Ansprüche, **dadurch gekennzeichnet, dass** der Abzweig (21) einem Vorsteuerdruckventil (15) des Vorsteuerkreises (9) nachgeschaltet ist.

6. Hydraulikanordnung nach einem der vorhergehenden Ansprüche, **dadurch gekennzeichnet, dass** das Getriebe (3) als Kegelscheibenumschlingungsgetriebe ausgebildet ist.

## Claims

1. Hydraulic arrangement (1) for controlling an automated transmission (3) connected downstream of an internal combustion engine having a start-stop device, having:
- a hydraulic energy source (11) for providing hydraulic energy,
- an energy store (23) which is connected downstream of the hydraulic energy source (11) and which serves for at least partially storing and releasing the hydraulic energy that can be provided by means of the hydraulic energy source (11),
- a hydraulic controller (5) which is assigned to the hydraulic energy source (11) and to the energy store (23) and which serves for controlling the automated transmission (3),
wherein the energy store (23) is assigned, by means of a branch (21), to a pilot control circuit (9) of the hydraulic controller (5), **characterized in that** the branch (21) is assigned to an OR valve (37), wherein a first OR port (41) of the OR valve (37) is connected downstream of the hydraulic energy source (11) and a second OR port (43) of the OR valve (37) is assigned to the pilot control circuit (9).

2. Hydraulic arrangement according to the preceding claim, **characterized in that** the energy store (23) has a plate spring store.

3. Hydraulic arrangement according to one of the preceding claims, **characterized in that** the branch (21) has a charging valve (35).

4. Hydraulic arrangement according to one of the preceding claims, **characterized in that** the energy store (23) has a mechanical locking means (47).

5. Hydraulic arrangement according to one of the preceding claims, **characterized in that** the branch (21) is connected downstream of a pilot control pressure valve (15) of the pilot control circuit (9).

6. Hydraulic arrangement according to one of the preceding claims, **characterized in that** the transmission (3) is in the form of a continuously variable cone-pulley transmission.

## Revendications

1. Système hydraulique (1) de commande d'une transmission (3) automatisée connectée en aval d'un moteur à combustion interne doté d'un dispositif de marche-arrêt, avec :
- une source d'énergie hydraulique (11) servant à mettre à disposition de l'énergie hydraulique ;
- un accumulateur d'énergie (23) connecté en aval de la source d'énergie hydraulique (11) servant à accumuler et à restituer, au moins en partie, l'énergie hydraulique pouvant être mise à disposition par la source d'énergie hydraulique (11) ;
- une commande hydraulique (5) associée à la source d'énergie hydraulique (11) et à l'accumulateur d'énergie (23) servant à commander la transmission automatisée (3), l'accumulateur d'énergie (23) étant associé à un circuit de précommande (9) de la commande hydraulique (5) à l'aide d'une bifurcation (21), **caractérisé en ce que** la bifurcation (21) est associée à la soupape OU (37), une première jonction OU (41) de la soupape OU (37) étant connectée en aval de la source d'énergie hydraulique (11) et une deuxième jonction OU (43) de la soupape OU (37) étant associée au circuit de précommande (9).

2. Système hydraulique selon la revendication précédente, **caractérisé en ce que** l'accumulateur d'énergie (23) comporte un accumulateur à ressort Belleville.

3. Système hydraulique selon l'une quelconque des revendications précédentes, **caractérisé en ce que** la bifurcation (21) comporte une soupape de charge (35).

4. Système hydraulique selon l'une quelconque des revendications précédentes, **caractérisé en ce que** l'accumulateur (23) comporte un verrouillage mécanique (47).

5. Système hydraulique selon l'une quelconque des revendications précédentes, **caractérisé en ce que** la bifurcation (21) est connectée en aval d'une soupape de précommande (15) du circuit de précommande (9).

6. Système hydraulique selon l'une quelconque des revendications précédentes, **caractérisé en ce que** la transmission (3) prend la forme d'une transmission à contact par disques coniques.
